# EUROPEAN PATENT APPLICATION

(11) **EP 4 836 438 A1**
(43) Date of publication of application: **04.11.2026**
(21) Application number: 26425017.6
(22) Date of filing: 23.03.2026
(51) Int. Cl.: H04Q 11/00, G02B 6/12, G02F 1/21, G02F 1/225

(54) **ELECTRONIC CONTROLLER AND CONTROL SYSTEM**

(71) Applicant: Sony Semiconductor Solutions Corporation, Atsugi-shi, Kanagawa 243-0014 (JP); Politecnico Di Milano, 20133 Milano (IT)
(72) Inventor: Morichetti, Francesco, 20133 Milano (IT); Melloni, Andrea Ivano, 20133 Milano (IT); Seyedinnavadeh, Seyedmohammad, 20133 Milano (IT); De Gaetano, Samuele, 20133 Milano (IT); Spalink, Gerd, 70372 Stuttgart (DE)
(74) Representative: MFG Patentanwälte Meyer-Wildhagen Meggle-Freund Gerhard PartG mbB

(57) **Abstract**

An electronic controller for an optical switch, wherein the optical switch is configured to guide optical power associated with a first optical signal input at a first input to at least one of a first output and a second output, via a first branch and a second branch, depending on a difference in optical distance between the first branch and the second branch, wherein the electronic controller includes circuitry configured to:
obtain a measurement signal of the optical power at the first output or the second output;
obtain, using a switch signal, a feedback signal, wherein obtaining the feedback signal includes modulating the measurement signal with a first periodic signal and averaging the resulting signal; and
apply a control signal, formed based on adding the integrated feedback signal and the first periodic signal, to an actuator for changing the optical phase length of the first branch or the second branch for guiding the optical power associated with the first optical signal to the first output or the second output as indicated by the switch signal.

## Description

### TECHNICAL FIELD

The present disclosure generally pertains to an electronic controller for an optical switch and a control system for an optical switch.

### TECHNICAL BACKGROUND

Generally, photonic switches based on Mach-Zehnder interferometers (MZIs) are known, for example, for a wavelength of 1550 nanometers (nm) or 1300 nm with optical bandwidths in the order of 10 nm.

These optical switches can route the optical power from an input port either to a first output port or to a second output port. They typically require the phase difference to be adjusted such that the optical waves in the two arms of the MZI interfere constructively for the ON-output port and destructively for the OFF-output port. Another variant can connect either a first input with the first output and a second input with the second output ("bar" setting or "through") or the first input with the second output and the second input with the first output ("cross" setting).

Typically, however, the operating range in terms of wavelength range that can be switched appropriately (that is with low residual power on the OFF-output port) may be limited.

Although there exist techniques for operating an optical switch, it is generally desirable to improve the existing techniques.

### SUMMARY

According to a first aspect, the disclosure provides an electronic controller for an optical switch, wherein the optical switch is configured to guide optical power associated with a first optical signal input at a first input to at least one of a first output and a second output, via a first branch and a second branch, depending on a difference in optical phase length between the first branch and the second branch, wherein the electronic controller comprises circuitry configured to:
obtain a measurement signal of the optical power at the first output or the second output;
obtain, using a switch signal, a feedback signal, wherein obtaining the feedback signal includes modulating the measurement signal with a first periodic signal and averaging the resulting signal; and
apply a control signal, formed based on adding the integrated feedback signal and the first periodic signal, to an actuator for changing the optical phase length of the first branch or the second branch for guiding the optical power associated with the first optical signal to the first output or the second output as indicated by the switch signal.

According to a second aspect, the disclosure provides a control system for an optical switch, comprising:
the optical switch, wherein the optical switch includes a first branch, a second branch, an actuator for changing the optical phase length of the first branch or the second branch, a first output, a second output and a first input, wherein the optical switch is configured to guide optical power associated with a first optical signal input at the first input to at least one of the first output and the second output, via the first branch and the second branch, depending on a difference in optical phase length between the first branch and the second branch;
an electronic controller, wherein the electronic controller includes circuitry configured to:
   obtain a measurement signal of the optical power at the first output or the second output;
   obtain, using a switch signal, a feedback signal, wherein obtaining the feedback signal includes modulating the measurement signal with a first periodic signal and averaging the resulting signal; and
   apply a control signal, formed based on adding the integrated feedback signal and the first periodic signal, to the actuator for guiding the optical power associated with the first optical signal to the first output or the second output as indicated by the switch signal.

Further aspects are set forth in the dependent claims, the drawings and the following description.

### BRIEF DESCRIPTION OF THE DRAWINGS

Embodiments are explained by way of example with respect to the accompanying drawings, in which:
Fig. 1 schematically illustrates two embodiments of optical switches,
Fig. 2 schematically illustrates an embodiment of a control system for an optical switch;
Fig. 3 schematically illustrates a principle of the control system;
Fig. 4 schematically illustrates an embodiment of an electronic controller;
Fig. 5 schematically illustrates an embodiment of an execution model for simulating a control system;
Fig. 6 schematically illustrates an embodiment of an initialization of an integrator used in the execution model of Fig. 5;
Fig. 7 schematically illustrates an embodiment of a branch splitter used in the execution model of Fig. 5;
Fig. 8 schematically illustrates simulation results of the execution model of Fig. 5;
Fig. 9 schematically illustrates simulation results of the execution model of Fig. 5;
Fig. 10 schematically illustrates an embodiment of an execution model for simulating a control system;
Fig. 11 schematically illustrates simulation results of the execution model of Fig. 10;
Fig. 12 schematically illustrates simulation results of the execution model of Fig. 10;
Fig. 13 schematically illustrates two embodiments of optical switches;
Fig. 14 schematically illustrates an embodiment of a dither compensation block;
Fig. 15 schematically illustrates an embodiment of an execution model for simulating a control system;
Fig. 16 schematically illustrates simulation results of the execution model of Fig. 15; and
Fig. 17 schematically illustrates simulation results of the execution model of Fig. 15.

### DETAILED DESCRIPTION OF EMBODIMENTS

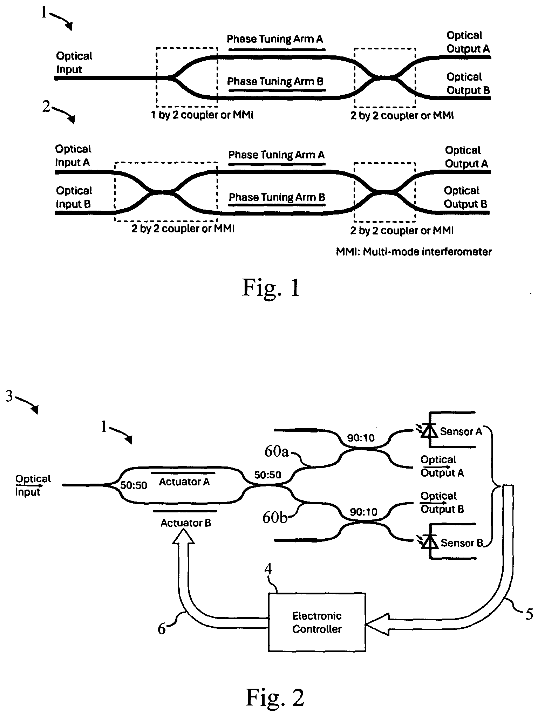

Before a detailed description of the embodiments under reference of Fig. 1 is given, general explanations are made.

As mentioned in the outset, MZI optical switches can route the optical power from the input either to a first output or to a second output. They typically require the phase difference between the MZI branches to be adjusted such that the optical waves in the two arms interfere constructively for the ON-output port and destructively for the OFF-output port. Another variant can connect either a first input with the first output and a second input with the second input ("bar" setting) or the first input with the second output and the second input with the first output ("cross" setting).

Typically, however, as further mentioned in the outset, the operating range in terms of wavelength range that can be switched appropriately may be limited.

While it is possible to support a (slightly) different operating wavelength, e.g., using tunable phase modulators in the arms of a Mach-Zehnder modulator, the optimum setting depends on many parameters, for example, process or temperature variations. It may thus be cumbersome to find reasonable working points for different operating wavelengths even in a narrow wavelength range.

It is thus generally desirable to extend the operating range in terms of wavelength range and to provide a control system that performs the optimum phase tuning in the background.

The control system as described herein (e.g., with MZI optical switches) using the described closed loop tuning may operate over a wide optical bandwidth (> 100 nm) with a high extinction ratio (> 30 dB (decibel)).

Switching speed is not limited by the slow tracking loop but can be accelerated to the settling time of the phase modulator.

Hence, some embodiments pertain to an electronic controller for an optical switch, wherein the optical switch is configured to guide optical power associated with a first optical signal input at a first input to at least one of a first output and a second output, via a first branch and a second branch, depending on a difference in optical phase length between the first branch and the second branch, wherein the electronic controller includes circuitry configured to:
obtain a measurement signal of the optical power at the first output or the second output;
obtain, using a switch signal, a feedback signal, wherein obtaining the feedback signal includes modulating the measurement signal with a first periodic signal and averaging the resulting signal; and
apply a control signal, formed based on adding the integrated feedback signal and the first periodic signal, to an actuator for changing the optical phase length of the first branch or the second branch for guiding the optical power associated with the first optical signal to the first output or the second output as indicated by the switch signal.

Accordingly, some embodiments pertain to a control system for an optical switch, wherein the control system includes:
the optical switch, wherein the optical switch includes a first branch, a second branch, an actuator for changing the optical phase of the first branch or the second branch, a first output, a second output and a first input, wherein the optical switch is configured to guide optical power associated with a first optical signal input at the first input to at least one of the first output and the second output, via the first branch and the second branch, depending on a difference in optical phase length between the first branch and the second branch;
an electronic controller, wherein the electronic controller includes circuitry configured to:
   obtain a measurement signal of the optical power at the first output or the second output;
   obtain, using a switch signal, a feedback signal, wherein obtaining the feedback signal includes modulating the measurement signal with a first periodic signal and averaging the resulting signal; and
   apply a control signal, formed based on adding the integrated feedback signal and the first periodic signal, to the actuator for guiding the optical power associated with the first optical signal to the first output or the second output as indicated by the switch signal.

The electronic controller and the control system are generally provided to enhance the wavelength operating range of an optical switch by providing a closed loop using a measurement of output optical power and at least one actuator for adjusting the output optical power.

As used herein, the term "optical signal" generally refers to electromagnetic radiation in the optical wavelength range, including or corresponding to a wavelength range in the ultraviolet spectral range, visible spectral range, and/or the infrared spectral range.

Generally, the optical switch has at least one input (an input may also be referred to as "optical input" or "optical input port" herein) and at least two outputs (an output may also be referred to as "optical output" or "optical output port" herein), wherein the at least one input and the at least two outputs are coupled via the first branch and the second branch.

The optical switch may be implemented by a photonic integrated circuit (PIC), for example, based on silicon.

The first branch (which may also be referred to as "first arm" herein) and the second branch (which may also be referred to as "second arm" herein) may be coupled to the at least one input by a 1-by-2 (optical) coupler (e.g., 50:50 optical coupler), a 2-by-2 (optical) coupler (e.g., 50:50 optical coupler), an adiabatic (optical) coupler, a multimode interferometer (MMI) or the like.

The first branch and the second branch may be coupled to at least two outputs by a 2-by-2 (optical) coupler (e.g., 50:50 optical coupler), an adiabatic (optical) coupler, a multimode interferometer (MMI) or the like.

Each of the first branch and the second branch is or corresponds to an optical waveguide configured to guide an optical signal along a predetermined path or curve.

The actuator is configured to change the optical phase length of the first branch or the second branch when the actuator is driven with a control signal. The actuator may be a heater (or heating element) for changing the refractive index of the first branch for changing the optical phase length of the first branch via thermos-optic effect. The actuator may be a current injection (or carrier depletion) modulator or the like for changing the refractive index of the first branch for changing the optical phase length of the first branch via plasma-dispersion effect or for changing the refractive index of the second branch for changing the optical phase length of the second branch via plasma-dispersion effect. An actuator may also be referred to as "phase actuator" or "phase modulator" herein. A phase actuator may also be referred to as "phase modulator" herein. The combination of a branch and an actuator may also be referred to as "phase tuning arm" herein.

As mentioned above, the optical switch is configured to guide optical power associated with a first optical signal input at the first input to at least one of the first output and the second output, via the first branch and the second branch, depending on a difference in optical phase length between the first branch and the second branch.

Thus, in some embodiments, the optical switch is a Mach-Zehnder interferometer, MZI, optical switch.

Hence, in some embodiments, the first optical signal (input at the first input) is split into a first part guided via the first branch and a second part guided via the second branch due to the coupling of the first input with the first branch and second branch. The coupling of the first branch and second branch with the first output and the second output leads to a certain distribution of optical power at the first output and the second output depending on the difference in optical phase length (OPL) between the first branch and the second branch. The difference in optical phase length may also be referred to as "phase difference" herein.

Thus, in some embodiments, the difference in OPL between the first branch and the second branch is tuned in a range of [-π,π] to direct the optical power to either the first output or the second output.

It has been recognized that a closed loop tuning of the difference in OPL using an actuator in at least one branch allows to stabilize the working point of the optical switch (i.e. whether to guide or direct the optical power to the first output or the second output) for a broad range of wavelengths, since variations in operating conditions (e.g., temperature) in one branch or in two branches can be compensated by adapting the driving of the actuator or second actuator, respectively.

It has further been recognized that a first actuator may be used to change the optical phase length of the first branch, and a second actuator may be used to change the optical phase length of the second branch when the respective actuator is driven with a control signal. This may improve the closed loop tuning, since each actuator may only have to account for a difference in OPL of π between the two branches (while a single actuator must account for the full range of 2π).

Moreover, it has been recognized that power consumption is low for switching the optical signal between different outputs, as only one actuator is to be driven at a time such that an absolute difference in OPL of π is introduced between the two branches to steer the first optical signal to the desired output.

In the following, the control loop will thus be discussed in more detail.

As mentioned above, the electronic controller includes circuitry configured to obtain a measurement signal of the optical power at the first output or the second output.

In some embodiments, the circuitry is configured to obtain a first measurement signal of the optical power at the first output and a second measurement signal of the optical power at the second output.

Generally, the optical power at the first output does not have to be measured as such, i.e. the total value is not required, but only a part of the optical power at the first output that fluctuates (linearly) in accordance with the optical power at the first output is required. For example, the optical power at the first output may be split into a small part for the measurement and into another part for further processing (e.g., further transmission or output in free space via an optical element). Other possibilities are (semi)transparent in-line photodetectors or photonic integrated probing. Optical power may also be referred to as "optical signal power" herein.

Similarly, the optical power at the second output does not have to be measured as such, i.e. the total value is not required, but only a part of optical power at the second output that fluctuates (linearly) in accordance with the optical power at the second output is required. For example, the optical power at the second output may be split in a small part for the measurement and in another part for further processing (e.g., further transmission or output in free space via an optical element). Other possibilities are (semi)transparent in-line photodetectors or photonic integrated probing.

The optical switch or the control system thus includes a first optical sensor configured to measure the optical power at the first output and to generate the first (electrical) measurement signal. The optical switch or the control system thus includes a second optical sensor configured to measure the optical power at the second output and to generate the second (electrical) measurement signal. An optical sensor may correspond to a photodetector such as a photodiode or the like. A measurement signal may also be referred to as "optical sensor output signal" herein.

As mentioned above, the electronic controller (the circuitry thereof) is configured to obtain, using a switch signal, a feedback signal, wherein obtaining the feedback signal includes modulating the measurement signal with a first periodic signal and averaging the resulting signal.

The switch signal indicates whether the optical power at the first input is to be guided to the first output or the second output.

In some embodiments, the circuitry is configured to receive the switch signal.

In embodiments in which one measurement signal is obtained (either indicating the optical power at the first output or at the second output), the switch signal is used for inverting the averaged resulting signal depending on whether the optical power is to be directed to the first output or the second output. Whether the averaged resulting signal or the inverted averaged resulting signal is used as the feedback signal is not particularly limited and a matter of implementation.

However, the switch signal may also be used in a different way for controlling the setting of the closed loop.

As mentioned above, in some embodiments, the optical switch includes a first actuator for changing the optical phase length of the first branch and a second actuator for changing the optical phase length of the second branch.

Thus, in some embodiments, the electronic controller (the circuitry thereof) is configured to obtain, using the switch signal, the feedback signal, wherein obtaining the feedback signal includes modulating, depending on the switch signal, the first measurement signal or the second measurement signal with the first periodic signal and averaging the resulting signal.

Hence, embodiments in which two measurement signals are obtained (one indicating the optical power at the first output and one indicating the optical power at the second output), the switch signal selects either the first measurement signal or the second measurement signal for modulation with the first periodic signal.

In some embodiments, the closed loop minimizes the optical power at a certain output.

Thus, in such embodiments, when the switch signal indicates that the optical power (at the first input) is to be guided to the first output, the second measurement signal is used for the closed loop. Similarly, in some of such embodiments, when the switch signal indicates that the optical power (at the first input) is to be guided to the second output, the first measurement signal is used for the closed loop.

In other embodiments, the closed loop maximizes the optical power at a certain output.

Thus, in such embodiments, when the switch signal indicates that the optical power is to be guided to the first output, the first measurement signal is used for the closed loop. Similarly, in such embodiments, when the switch signal indicates that the optical power is to be guided to the second output, the second measurement signal is used for the closed loop.

The first periodic (electrical) signal is not particularly limited and may be a sine, a rectangular signal, a triangular signal or the like. The first periodic signal may also be referred to as "dithering signal" or "first dithering signal" herein.

The modulation is typically performed by multiplying the two electrical signals with each other, i.e., the first periodic signal with the first measurement signal or the second measurement signal.

The electronic controller (the circuitry thereof) is typically configured to generate the first periodic signal.

As mentioned above, the electronic controller (the circuitry thereof) is configured to apply a control signal, formed based on adding the integrated feedback signal and the first periodic signal, to an actuator for changing the optical phase length of the first branch or the second branch for guiding the optical power associated with the first optical signal to the first output or the second output as indicated by the switch signal.

In some embodiments, the electronic controller (the circuitry thereof) is configured to apply the control signal, formed based on adding the integrated feedback signal and the first periodic signal, either to a first actuator for changing the optical phase length of the first branch or to a second actuator for changing the optical phase length of the second branch.

The electronic controller (the circuitry thereof) is configured to form the control signal based on integrating the feedback signal, then adding the integrated feedback signal and the first periodic signal.

The integration of the feedback signal ensures that the error converges to zero and the loop is stable (to reach the correct actuator settings). Just applying the feedback signal to the actuator will result in either large residual error or an instable loop.

Thus, generally, only a single actuator is driven with the control signal at a time. In some embodiments, only a single actuator is provided that is driven with the control signal and configured to change the OPL of the first branch or the second branch. In other embodiments, an actuator is provided for each branch and driven with the control signal when the OPL of the respective branch is to be changed.

In some embodiments (in which an actuator is provided for each branch), when the switch signal indicates that the optical power is to be guided to the first output, the first actuator is driven with the (electrical) control signal. Similarly, in some embodiments, when the switch signal indicates that the optical power is to be guided to the second output, the second actuator is driven with the (electrical) control signal.

This may be implemented in various ways.

For example, in some embodiments, the sign of the control signal may be used to decide whether to apply the control signal to the first actuator or the second actuator, wherein the absolute value of the control signal is applied to the first actuator or the second actuator (in case the sign is negative).

Hence, in some embodiments, the control signal is applied to the first actuator or the second actuator depending on the sign of the control signal, and wherein the absolute value of the control signal is applied to the respective actuator in case of a negative sign.

The control signal may also be referred to as "actuator signal" herein.

The periodic component of the control signal (due to the first periodic signal) causes a periodic component in the measurement signal(s). This periodic component in the measurement signal(s) decreases when the optical power at the desired output reaches the maximum (according to the maximum optical power of the first optical signal) and, thus, the desired switch position. An efficient closed loop can thus be formed. An electrical signal resulting from the modulation of the respective measurement signal, as mentioned above, with the first periodic signal is thus used as input for the closed loop.

In some embodiments, the circuitry is configured to store information associated with the control signal once the closed loop is settled.

The closed loop may be considered as settled once the feedback signal or the control signal has stabilized in a certain range around a certain value.

The information may include a waveform of the first periodic signal, an amplitude of the first periodic signal and/or the feedback signal and/or the control signal, a frequency of the first periodic signal, etc.

The information may further include a wavelength of the input optical signal.

The information may be used as a starting point for the closed loop for quick settlement of the closed loop, or may be used for further modulating a control signal for quick settlement of the closed loop.

In some embodiments, the circuitry includes an integrator for loop settling and the integrator is initialized with a different value depending on the switch signal.

In other words, a first value (or first level) is used for initializing the integrator when the optical power is to be guided to the first output and a second value (or second level) is used for initializing the integrator when the optical power is to be guided to the second output.

This may allow the closed loop to settle more quickly.

In some embodiments, the circuitry is configured to store an amplitude (or level) of the integrated feedback signal as a value for initializing the integrator once the closed loop is settled.

This allows the closed loop to settle more quickly.

As mentioned above, in some embodiments, the optical switch includes a second input.

In some embodiments, the optical switch is configured to guide optical power associated with a second optical signal input at the second input to a different output than the first optical signal input at the first input.

It has been recognized that, in such cases, the closed loop may be less stable and may converge slower than for a single input optical signal. The reason is that the monitor photodetector cannot distinguish the power from the two input unless they are labelled.

It has, however, been recognized that stability and convergence of the closed loop may improve, in such cases, when one of the optical signals (e.g., the first optical signal input at the first input or the second optical signal at the second input) is periodically modulated in amplitude before input to the optical switch at the respective input (for labelling the respective input optical signal). Also, both input optical signals at the two different ports may be modulated with two different frequencies.

Thus, in some embodiments, the circuitry is configured to control a modulation - e.g. an amplitude modulation - of the first optical signal or the second optical signal according to a second periodic signal before input at the first input. In some embodiments, the circuitry is configured to control a modulation of the first optical signal according to a second periodic signal before input at the first input and to control a modulation of the second optical signal according to a third periodic signal before input at the second input, wherein the second periodic signal and the third periodic signal have different frequencies.

The second periodic (electrical) signal and the third periodic (electrical) signal are not particularly limited and each may be a sine, a rectangular signal, a triangular signal or the like.

The second periodic signal may also be referred to as "second dithering signal" herein. The third periodic signal may also be referred to as "third dithering signal" herein.

The circuitry may thus drive a third actuator before the optical switch to amplitude modulate the respective optical signal (e.g., the first optical signal). The third actuator may be implemented by a variable optical attenuator based on carrier injection. For example, the variable optical attenuator may be implemented by a photonic integrated circuit (PIC), for example, based on silicon. In some embodiments, the optical switch includes the third actuator.

In some embodiments, the circuitry may drive additionally a fourth actuator before the optical switch to amplitude modulate also the other optical signal with a different frequency.

It has been recognized that stability and convergence of the closed loop may further improve, in such cases, when the respective measurement signal is further modulated in accordance with the second periodic signal.

Thus, in some embodiments, the circuitry is configured to obtain, using the switch signal, the feedback signal, wherein obtaining the feedback signal includes modulating, depending on the switch signal, the first measurement signal or the second measurement signal with the first periodic signal and the second periodic signal and averaging the resulting signal.

In some embodiments, the circuitry is configured to obtain, using the switch signal, the feedback signal, wherein obtaining the feedback signal includes modulating, depending on the switch signal, the first measurement signal or the second measurement signal with the first, second and third periodic signal and averaging the resulting signal.

It has further been recognized that wavelength operating range and power consumption may be further reduced by introducing a difference in OPL between the first branch and the second branch of π/2 in the case of two input optical signals, since, in such cases, only a further phase shift (i.e. a difference in OPL between the first branch and the second branch) of π/2 (instead of π) in one of the arms is needed to guide the first optical signal to the first output (and thus the second optical signal to the second output) or the first optical signal to the second output (and thus the second optical signal to the first output).

Hence, in some embodiments, the first branch is longer than the second branch, corresponding to a difference in optical phase length of π/2.

Some embodiments pertain to a corresponding electronic control method for an optical switch, wherein the optical switch is configured to guide optical power associated with a first optical signal input at a first input to at least one of a first output and a second output, via a first branch and a second branch, depending on a difference in optical phase length between the first branch and the second branch, wherein the electronic control method includes:
obtaining a measurement signal of the optical power at the first output or the second output;
obtaining, using a switch signal, a feedback signal, wherein obtaining the feedback signal includes modulating the measurement signal with a first periodic signal and averaging the resulting signal; and
applying a control signal, formed based on adding the integrated feedback signal and the first periodic signal, to an actuator for changing the optical phase of the first branch or the second branch for guiding the optical power associated with the first optical signal to the first output or the second output as indicated by the switch signal.

The electronic control method may be performed by the electronic controller for an optical switch as described herein.

The methods as described herein are also implemented in some embodiments as a computer program causing a computer and/or a processor to perform the method, when being carried out on the computer and/or processor. In some embodiments, a non-transitory computer-readable recording medium is also provided that stores therein a computer program product, which, when executed by a processor, such as the processor described above, causes the methods described herein to be performed.

Returning to Fig. 1, there are schematically illustrated a first embodiment of an optical switch 1 and a second embodiment of an optical switch 2, which are discussed in the following.

The optical switch 1, as illustrated in the upper part of Fig. 1, has an optical input which is coupled via a 1-by-2 (optical) coupler or an MMI to a first branch - first arm - and a second branch - second arm. The horizontal line above the first branch represents a first phase actuator and the horizontal line above the second arm represents a second phase actuator. The first arm together with the first phase actuator is denoted as phase tuning arm A. The second arm together with the second phase actuator is denoted as phase tuning arm B.

The optical switch 1 further has a first optical output A and a second optical output B, each coupled to the first branch and the second branch by a 2-by-2 (optical) coupler or an MMI.

If both branches have the same optical phase length OPL (i.e. zero phase shift), the optical power of the optical signal input at the optical input is equally distributed between the two optical outputs.

The optical switch 2, as illustrated in the lower part of Fig. 1, has a first optical input A and a second optical input B, each coupled via a 2-by-2 (optical) coupler or an MMI to a first branch - first arm - and a second branch - second arm. The horizontal line above the first branch represents a first phase actuator and the horizontal line above the second arm represents a second phase actuator. The first arm together with the first phase actuator is denoted as phase tuning arm A. The second arm together with the second phase actuator is denoted as phase tuning arm B.

The optical switch 2 further has a first optical output A and a second optical output B, each coupled to the first branch and the second branch by a 2-by-2 (optical) coupler or an MMI.

Typically, if both branches have the same optical phase length OPL (i.e. zero phase shift), the first optical signal input at the first optical input is guided to the second optical output B and the second optical signal input at the second optical input B is guided to the first optical output A.

Fig. 2 schematically illustrates an embodiment of a control system 3 for an optical switch 1, which is discussed in the following under reference of Figs. 2, 3 and 4.

Referring to Fig. 2, the control system 3 includes an optical switch 1 of Fig. 1, a first optical sensor A, a second optical sensor B and an electronic controller 4.

The optical switch 1 includes an optical input, a first branch and an associated first actuator A, a first optical output 60a, a second branch and an associated second actuator B, and a second optical output 60b.

An optical signal is provided at the input and guided via a first branch and a second branch to at least one of the first optical output 60a and the second optical output 60b depending on a difference in optical phase length between the first branch and the second branch.

The first actuator A is configured to change, when a control signal is applied, the optical phase length of the first branch by changing (locally) the refractive index of the first branch, for example, by heating the first branch. The second actuator B is configured to change, when a control signal is applied, the optical phase length of the second branch by changing (locally) the refractive index of the second branch, for example, by heating the second branch.

The optical power at the first optical output 60a is split in a ratio 100-X:X (for instance 90:10 by a 90:10 optical) coupler) to provide a small part of the optical power to the first optical sensor A and another (larger) part for further processing via optical output A. Similarly, the optical power at the second optical output 60b is split in a ratio 100-X:X (for instance by a 90:10 optical coupler) to provide a small part of the optical power to the second optical sensor B and another (larger) part for further processing via optical output B.

Alternatively, in other embodiments, (semi)transparent in-line photodetectors may be used for the first optical sensor A and second optical sensor B such that the first optical sensor A and second optical sensor B, respectively, directly measures the optical power at the respective optical output (60a or 60b). Another alternative, in other embodiments, is contactless integrated photonic probing.

Each of the first optical sensor A and second optical sensor B generates a measurement signal (summarized by reference sign 5) of the optical power at the respective optical output (60a or 60b), which is received or obtained by the electronic controller 4.

Based on the measurement signals and a switch signal that indicates whether the optical power of the input optical signal is to be guided to the first optical output 60a or the second optical output 60b, the electronic controller 4 obtains a feedback signal and forms a control signal 6 based on adding the integrated feedback signal and a periodic signal ("dithering signal") and applies the control signal 6 to either the first actuator A or the second actuator B, in accordance with the switch signal, to guide the optical power (and thus the optical signal) to the first optical output 60a or the second optical output 60b, respectively.

For example, as will also be discussed in more detail below, the sign of the control signal 6 may be used to decide, in accordance with the switch signal, to which actuator the control signal 6 is to be applied.

Thus, a closed-loop control system 3 is proposed using integrated (optical) sensors and actuators (see **Errore.** L'origine **riferimento non** è stata trovata.). The control system 3 uses a dithering technique.

While in Fig. 2, the control system 3 is shown for the optical switch 1 of Fig. 1 with one optical input, the control system 3 similarly works for the optical switch 2 of Fig. 1 with two optical inputs.

In such a case, for example, if there is only an optical signal at one of the optical inputs, the automatic adjustment of the control system 3 works with the 2-by-2 switch topology in the same way.

The principle of the control system 3 is schematically shown in **Errore. L'origine riferimento non** è **stata trovata..**

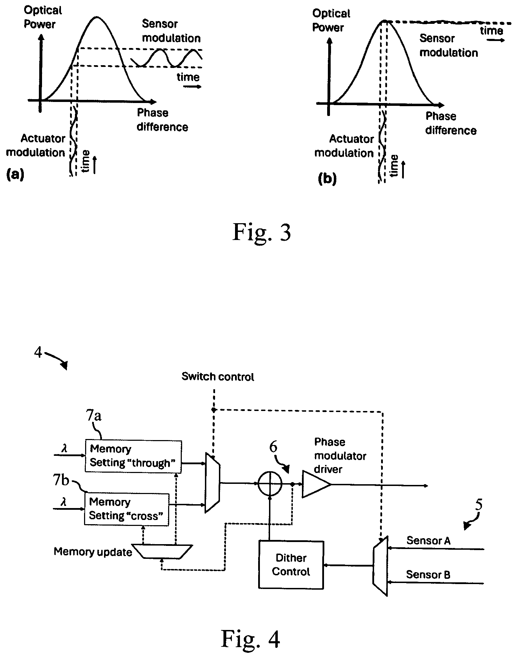

Referring now to Fig. 3, for an optical switch, the target is to achieve either maximum or zero optical power at the optical output port.

A dithering signal on the actuators can be recovered synchronously in the optical sensor output signals (measurement signals). The sign and the level of the control signal 6 is used to steer the bias of the actuator(s) such that the target is reached. The target can be either the minimum or the maximum optical signal power, depending on the optical sensor location and optical switch state.

If there is optical power at the optical input, the optical sensor sees the dithering signal. The optical sensor output signal should then be synchronously demodulated (i.e., multiplied) with the dithering signal and subsequently averaged to obtain a feedback signal. The dithering signal may be a sine wave or a symmetric square wave, for example. The averaging period should be an integer multiple of the period of the dithering signal.

If the actuator is not in the optimum bias point (a), the magnitude of this value indicates the distance from the optimum, while the sign of this value indicates the direction of the optimum. So, that value can be appropriately weighted and then added to the dithering signal to form the control signal 6. Since the amplitude of the dithering signal in the optical signal is proportional to the slope (first derivative) of the output optical power versus phase difference, at the optimum bias point, there will be almost no dithering signal at the optical sensor (b).

Fig. 4 schematically illustrates an embodiment of the electronic controller 4 for an optical switch 2 with two optical inputs that can be operated in "bar" setting or "cross" setting.

The electronic controller 4 includes a dither control for generating a control signal, based on measurement signals 5 from the optical sensors A and B, and memory for storing information associated with the control signal 6 once the closed loop is settled. The information includes the wavelength of the input optical signal. The memory includes a first memory 7a for the "through" setting and a second memory 7b for the "cross" setting.

The control signal from the dithering control is further adjusted based on the stored information associated with the control signal 6. Thus, switching speed can be accelerated by memorizing phase modulator setting values for the two switch setting points. When the switch should go to the other setting point, the value from the memory is applied. The adaptation loop will then quickly reach the optimum value.

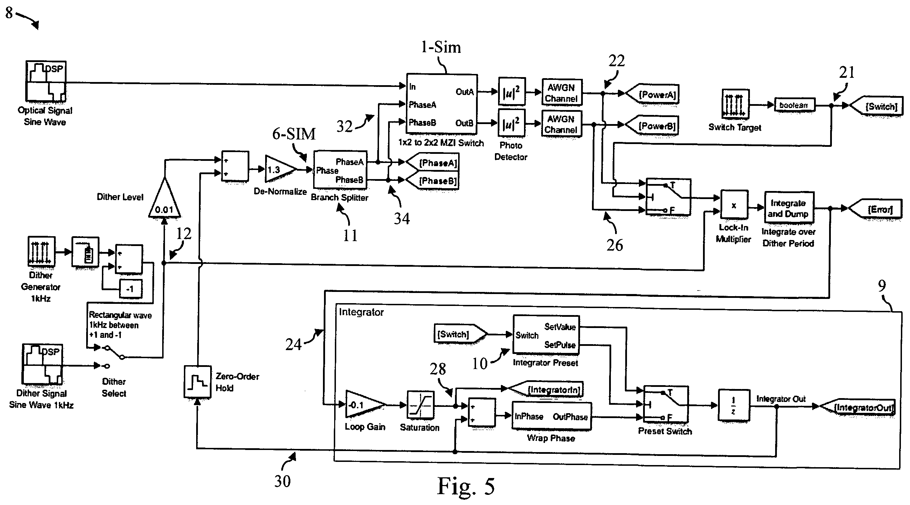

Fig. 5 schematically illustrates an embodiment of an execution model 8 for simulating the control system 3 of Fig. 2 for an optical switch 1 of Fig. 1 with one optical input, which is discussed in the following under reference of Figs. 5 to 9.

The simulated optical switch 1-SIM (corresponding to a model of optical switch 1 of Fig. 1 or Fig. 2) is built in the simulation from one 1-by-2 MMI, two phase modulators and one 2-by-2 MMI.

The simulated optical switch 1-SIM has three inputs - "In", "PhaseA" and "PhaseB" - and two outputs - "OutA" (first output) and "OutB" (second output).

An optical signal is modeled by a complex-valued sine wave that is input to the simulated optical switch 1-SIM at "In".

The simulated control signal 6-SIM (corresponding to a model of control signal 6 of Fig. 2) is either input to "PhaseA" (corresponding to a model of the first branch and the first phase actuator A of Fig. 2) or "PhaseB" (corresponding to a model of the second branch and the second phase actuator B of Fig. 2) according to the output of a branch splitter 11.

Hence, the branch splitter 11 distributes the actuator signal to two phase modulators.

The reference sign is 32 for the control signal that is applied to "PhaseA" and 34 for the control signal that is applied to "PhaseB".

A part of the input optical signal is output at "OutA" and a part of the input optical signal is output at "OutB" depending on the applied control signal 32 to "PhaseA" or the applied control signal 34 to "PhaseB".

A simulated first measurement signal 22 of the optical power at "OutA" and a simulated second measurement signal 26 of the optical power at "OutB" are obtained (corresponding to a model of measurement signals 5 of Fig. 2).

Depending on a simulated switch signal 21, either the simulated first measurement signal 22 or the simulated second measurement signal 26 is modulated (here multiplied by Lock-In Multiplier) with a simulated dithering signal 12 (e.g., a square wave or a sine wave) [corresponding to a model of a first periodic signal].

In this embodiment, a switch selects the photodetector signal that should be minimized by the loop.

The resulting signal is processed by a two-stage integrator for averaging and loop settling. First, the resulting signal is integrated over a dither period to obtain an error signal 24, and then the error signal 24 is input to an integrator 9 to obtain an integrator input signal 28 which is summed up over time to finally average the resulting signal of the by Lock-In Multiplier.

The error signal 24 corresponds to a feedback signal.

Depending on the simulated switch signal 21, the integrator preset 10 supplies a different value at initialization (i.e. when the simulated switch signal 21 changes its state) to accelerate the settlement of the closed loop.

Hence, the integrator 9 is preset at the instant when the switch target changes from A to B or vice versa.

Wrapping the phase in the integrator 9 ensures that the actuator signals stay within the actuator limits.

The output of the integrator 9 corresponds to an integrated feedback signal 30 and is used for forming the next input to the simulated optical switch 1-SIM.

The simulated control signal 6-SIM is formed based on the simulated dithering signal 12 and the integrated feedback signal 30.

For a 2-by-2 MZI optical switch, the same optimization loop can work with the restriction that the second optical input of the optical switch must not be driven, while the optimization loop is active.

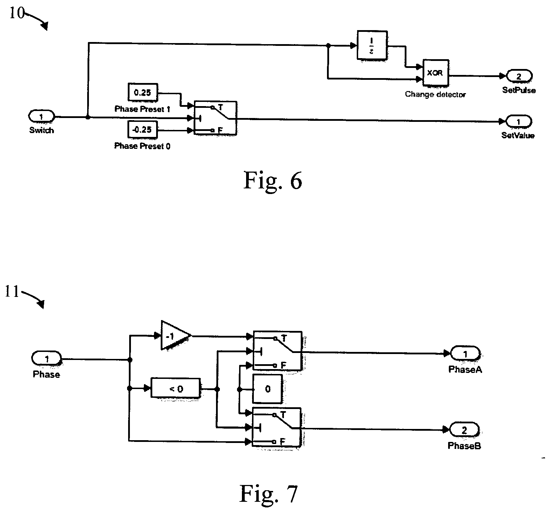

Fig. 6 schematically illustrates an embodiment of an initialization of an integrator 9 used in the execution model 8 of Fig. 5.

The integrator preset 10 (also referred to as preset block 10) selects, depending on the switch target position, a different preset value. A change detector applies the preset value after the instant of changing the switch target position. The preset block 10 might be extended with a target wavelength input to provide wavelength-dependent preset values. The preset values can be calibrated by replacing them with the integrator output - amplitude of the feedback signal 30 - value after settling.

Fig. 7 schematically illustrates an embodiment of a branch splitter 11 used in the execution model 8 of Fig. 5.

Since the loop can generate negative values but the phase actuators can only do positive phase shifts, the sign of the phase input is used to connect the phase control signal (i.e. the control signal or actuator signal) either to phase actuator A (the first actuator A) or to phase actuator B (the second actuator B). The unused phase actuator is driven with zero. An inverter ensures that both phase actuators are always driven with a positive signal.

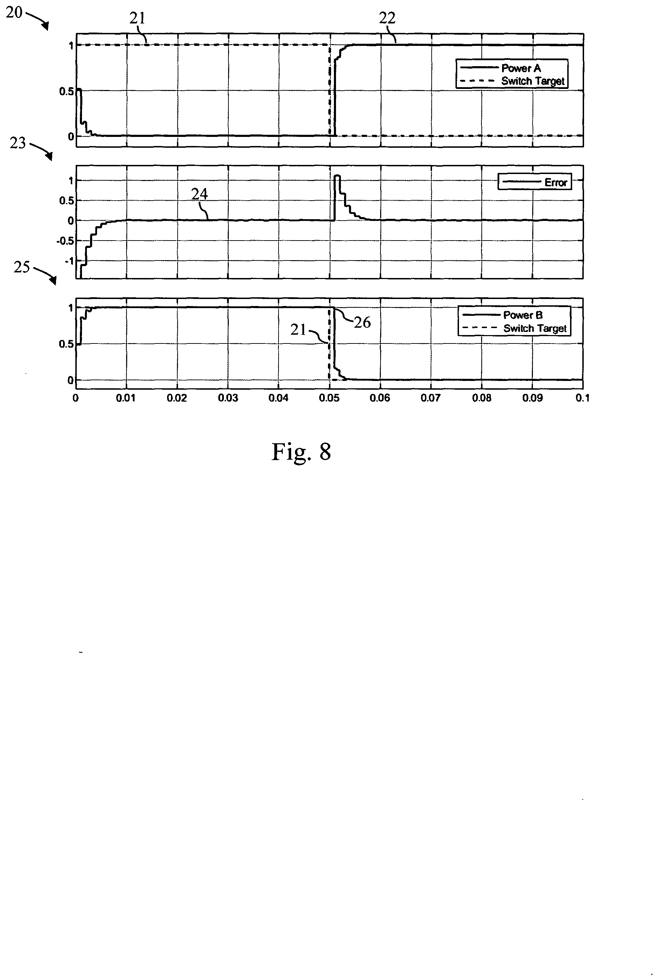

Fig. 8 schematically illustrates simulation results of the execution model 8 of Fig. 5, which are discussed in the following.

The preset values for the integrator 9 were chosen deliberately to be off target (+/-0.25 instead of +/-0.5) to visualize the settling of the loop.

The graph 20 shows the switch target 21 (i.e. simulated switch signal 21). In the first half of the simulation, the switch target is "1" and, thus, the optical power should be guided to the second output "OutB". In the second half of the simulation, the switch target is "0" and, thus, the optical power should be guided to the first output "OutA".

As depicted in graph 20, the optical power at the first output 22 (i.e. the first measurement signal 22) converges to zero in the first half of the simulation and to one in the second half of the simulation.

As depicted in graph 23, the error signal 24 (i.e. the feedback signal) converges to zero in the first half of the simulation and the second half of the simulation.

As depicted in graph 25, the optical power at the second output 26 (i.e. the second measurement signal 26) converges to one in the first half of the simulation and to zero in the second half of the simulation.

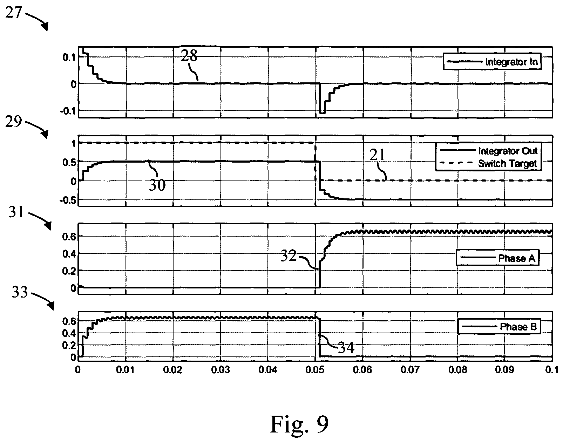

Fig. 9 schematically illustrates simulation results of the execution model 8 of Fig. 5, which are discussed in the following.

The simulation results of Fig. 9 correspond to the simulation results of Fig. 8.

The preset values for the integrator 9 were chosen deliberately to be off target (+/-0.25 instead of +/-0.5) to visualize the settling of the loop.

As depicted in graph 27, the input integrator signal 28 converges to zero in the first half of the simulation and the second half of the simulation.

As depicted in graph 29, the integrated feedback signal 30 converges to +0.5 in the first half of the simulation and to -0.5 in the second half of the simulation (these values can be stored for initialization of the integrator 9).

As depicted in graph 31, the control signal 32 is zero in the first half of the simulation and stabilizes in a narrow range in the second half of the simulation.

As depicted in graph 33, the control signal 34 stabilizes in a narrow range in the first half of the simulation and is zero in the second half of the simulation.

The effect of dithering is observed in the phase values (control signals 32 and 34) but is invisible in the optical power (measurement signals 22 and 26) and error values (error signal 24) after settling.

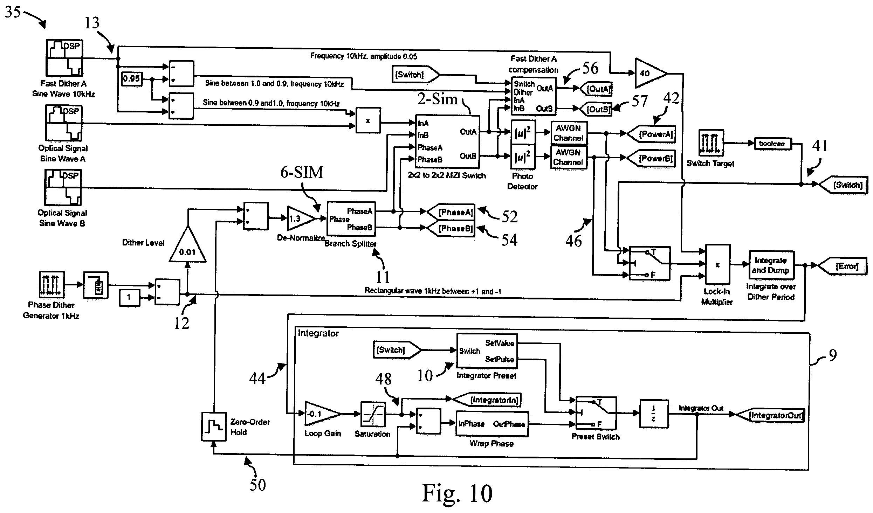

Fig. 10 schematically illustrates an embodiment of an execution model 35 for simulating the control system 3 of Fig. 2 for an optical switch 2 of Fig. 1 with two optical inputs, which is discussed in the following under reference of Figs. 10 to 12.

The execution model 35 of Fig. 10 is similar the execution model 8 of Fig. 5.

The differences are the following:
The simulated optical switch 2-SIM (corresponding to a model of optical switch 2 of Fig. 1) is built in the simulation from one 2-by-2 to 2-by-2 MZI optical switch.

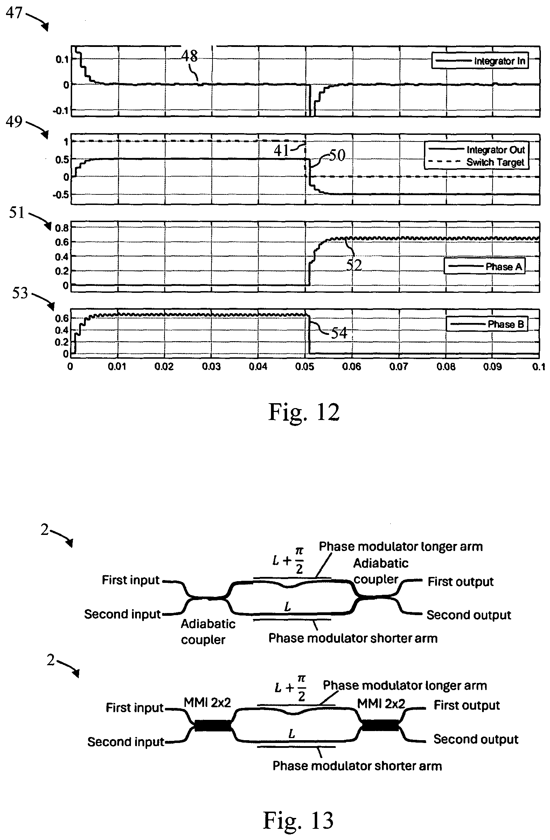

Moreover, the simulated optical switch 2-SIM is modeled as an optical switch with a difference in optical phase length of π/2 between the first branch and the second branch (see also discussion under reference of Fig. 13 below). In other words, when no control signal is applied to an actuator, the difference in optical phase length is π/2.

The simulated optical switch 2-SIM has four inputs - "InA" (first input), "InB" (second input), "PhaseA" and "PhaseB" - and two outputs - "OutA" (first output) and "OutB" (second output).

A first optical signal is modeled by a complex-valued sine wave that is input to the simulated optical switch 2-SIM at "InA". The first optical signal is modulated (e.g., multiplied) according to a second dithering signal 13 (corresponding to a model of the second periodic signal 13) before input at the first input "InA".

Hence, the optical signal A (the first optical signal) is amplitude-modulated with a fast dither signal 13 from dither generator A. The amplitude modulation is kept small to keep the integrity of the original optical signal A.

This modulation may be achieved in reality, for example, with a variable optical attenuator based on carrier injection. The 2-by-2 MZI optical switch is then background-calibrated due to the added small amplitude modulation in the input signal path of the first optical signal.

This provides enhanced stability and faster convergence of the closed loop in the case of two input optical signals.

A second optical signal is modeled by a complex-valued sine wave that is input to the simulated optical switch 2-SIM at "InB".

The second input optical signal B (the second optical signal) of the simulated optical switch 2-SIM has no dither.

For illustration purposes, the first optical signal has a different power level than the second optical signal.

The system contains the fast dither A compensation block to demonstrate that the dither applied to optical input signal A can be removed with additional variable optical attenuators. This block is not required for the tuning loop but can be added to mitigate the effect of the fast dither signal A.

The last difference is the following:
The simulated first measurement signal 42 of the optical power at "OutA" and the simulated second measurement signal 46 of the optical power at "OutB" are obtained (corresponding to a model of measurement signals 5 of Fig. 2) as before.

However, depending on the simulated switch signal 41, either the simulated first measurement signal 42 or the simulated second measurement signal 46 is modulated (here multiplied by Lock-In Multiplier) with the simulated dithering signal 12 (e.g., a square wave or a sine wave) (corresponding to a model of a first periodic signal) and the second dithering signal 13 (corresponding to a model of the second periodic signal 13).

Hence, to lock-in to both dither signals, the responsible multiplier multiplies the sensor signal with both dither tones.

This provides enhanced stability and faster convergence of the closed loop in the case of two input optical signals.

The phase modulator dithering and the integrator are the same as in the system for the 1-by-2 optical switch 1.

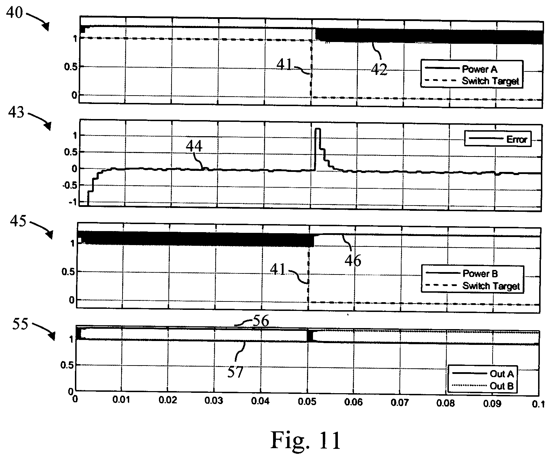

Fig. 11 schematically illustrates simulation results of the execution model 35 of Fig. 10, which are discussed in the following.

The graph 40 shows the switch target 41 (i.e. simulated switch signal 41). In the first half of the simulation, the switch target is "1" and, thus, the optical power of the second input "InB" should be guided to the first output "OutA" and the optical power of the first input "InA" should be guided to the second output "OutB" ("cross" setting). In the second half of the simulation, the switch target is "0" and, thus, the optical power of the first input "InA" should be guided to the first output "OutA" and the optical power of the second input "InB" should be guided to the second output "OutB" ("bar" setting).

As depicted in graph 40, the optical power at the first output 42 (i.e. the first measurement signal 42) corresponds to the second optical signal (input at "InB") in the first half of the simulation and to the first optical signal (input at "InA") in the second half of the simulation.

As depicted in graph 43, the error signal 44 (i.e. feedback signal) converges to zero in the first half of the simulation and the second half of the simulation.

As depicted in graph 45, the optical power at the second output 46 (i.e. the second measurement signal 46) corresponds to the first optical signal (input at "InA") in the first half of the simulation and to the second optical signal (input at "InB") in the second half of the simulation.

As depicted in graph 55, the dither signal originally applied to the first optical signal (input at "InA") was successfully removed from both Out A (measurement signal 56) and from Out B (measurement signal 57).

Fig. 12 schematically illustrates simulation results of the execution model 35 of Fig. 10, which are discussed in the following.

The simulation results of Fig. 12 correspond to the simulation results of Fig. 11.

As depicted in graph 47, the input integrator signal 48 converges to zero in the first half of the simulation and the second half of the simulation.

As depicted in graph 49, the feedback signal 50 converges to +0.5 in the first half of the simulation and to -0.5 in the second half of the simulation.

As depicted in graph 51, the control signal 52 is zero in the first half of the simulation and stabilizes in a narrow range in the second half of the simulation.

As depicted in graph 53, the control signal 54 stabilizes in a narrow range in the first half of the simulation and is zero in the second half of the simulation.

Hence, the simulation results show the expected settling of the phase actuator signals.

Fig. 13 schematically illustrates two embodiments of optical switches 2.

To make a 2-by-2 MZI switch wideband in both positions, and achieve small power consumption by the phase shifters, a π/2 delay is added to one arm.

The 2-by-2 MZI optical switch topologies may provide wideband performance and low power consumption independent from switch position.

The MZI is in the quadrature point when neither of the phase modulators is driven. It is achieved by making one arm longer by a quarter of the guided wavelength. This corresponds to a phase shift of π/2. Then, driving the phase modulator in the longer arm to achieve an additional π/2 phase shift will connect the first input with the first output and the second input with the second output. Driving the phase modulator in the shorter arm to achieve an additional π/2 phase shift will connect the first input with the second output and the second input with the first output. The latter switch position will have the widest bandwidth because the effective path lengths between the couplers match completely.

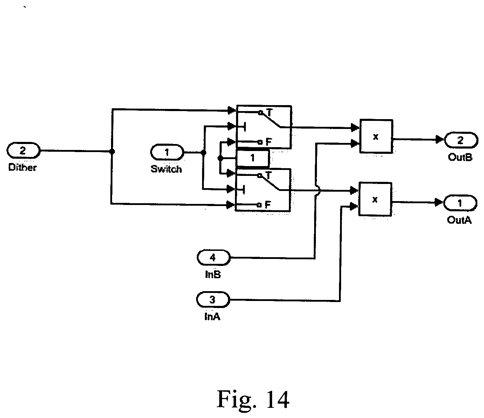

Fig. 14 schematically illustrates an embodiment of the dither compensation block of the execution model 35 of Fig. 10.

A variable optical attenuator in both output paths can be used to remove the dither signal applied to input path A. Depending on the switch position, the amplitude dither is present on either "InA" or "InB". The dither compensation signal must be applied to the correct output path. No compensation is applied in the other path.

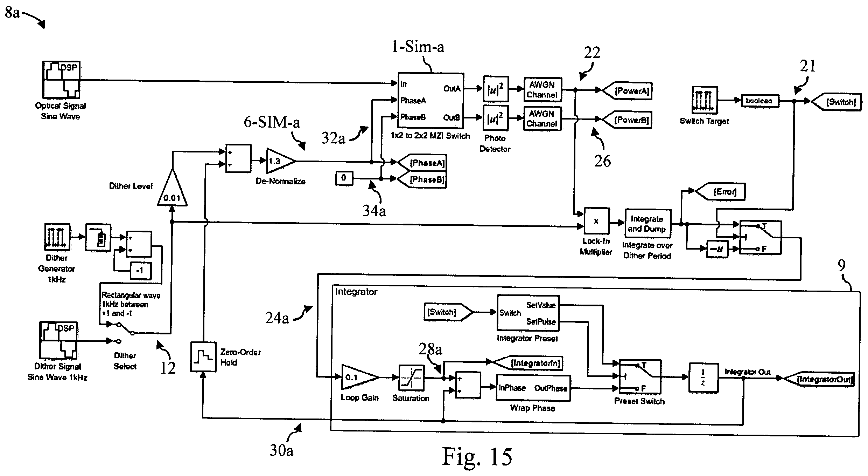

Fig. 15 schematically illustrates an embodiment of an execution model 8a for simulating the control system 3 of Fig. 2 for an optical switch 1 of Fig. 1 with one optical input, which is discussed in the following under reference of Figs. 15 to 17.

The execution model 8a of Fig. 15 is similar the execution model 8 of Fig. 5.

The simulated optical switch 1-SIM-a (corresponding to a model of optical switch 1 of Fig. 1 or Fig. 2 with only a single actuator, for example, in the first branch) is built in the simulation from one 1-by-2 MMI, a single phase modulator and one 2-by-2 MMI.

In brief, Fig. 15 shows a simulation of a MZI switch tuning system with single phase actuator (Phase A) and single power sensor (Power A). The switch signal controls the inversion of the sign of the error signal.

The simulated optical switch 1-SIM-a has three inputs - "In", "PhaseA" and "PhaseB" - and two outputs - "OutA" (first output) and "OutB" (second output).

An optical signal is modeled by a complex-valued sine wave that is input to the simulated optical switch 1-SIM at "In".

The simulated control signal 6-SIM-a (corresponding to a model of control signal 6 of Fig. 2) is input to "PhaseA" (corresponding to a model of the first branch and the first phase actuator A of Fig. 2). As there is no actuator in the second branch, the input to "PhaseB" is zero.

The reference sign is 32a for the control signal that is applied to "PhaseA" and 34a for the zero input to "PhaseB".

A part of the input optical signal is output at "OutA" and a part of the input optical signal is output at "OutB" depending on the applied control signal 32a to "PhaseA".

A simulated first measurement signal 22 of the optical power at "OutA" and a simulated second measurement signal 26 of the optical power at "OutB" are obtained (corresponding to a model of measurement signals 5 of Fig. 2) in the simulation.

However, only the first measurement signal 22 is used in the control loop. It is thus sufficient to obtain a measurement signal of the optical power at one of the optical outputs.

The first measurement signal is modulated (i.e. multiplied) with a simulated dithering signal 12 (e.g., a square wave or a sine wave) [corresponding to a model of a first periodic signal].

The resulting signal is averaged over a dither period and then, depending on a simulated switch signal 21, either the averaged resulting signal is further processed or the inverted averaged resulting signal depending on whether the optical power is to be directed to the first output or the second output. Thereby, an error signal 24a (i.e. the feedback signal) is obtained.

The error signal 24a is input to an integrator 9 to obtain an integrator input signal 28a which is summed up over time.

Depending on the simulated switch signal 21, the integrator preset 10 supplies a different value at initialization (i.e. when the simulated switch signal 21 changes its state) to accelerate the settlement of the closed loop.

Hence, the integrator 9 is preset at the instant when the switch target changes from A to B or vice versa.

Wrapping the phase in the integrator 9 ensures that the actuator signals stay within the actuator limits.

The output of the integrator 9 corresponds to an integrated feedback signal 30a and is used for forming the next input to the simulated optical switch 1-SIM-a.

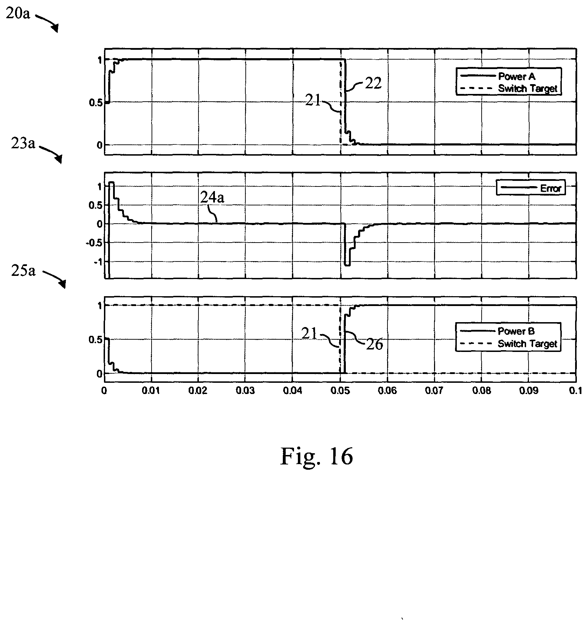

Fig. 16 schematically illustrates simulation results of the execution model 8a of Fig. 15.

The preset values for the integrator 9 were chosen deliberately to be off target (+0.25 and +1.25 instead of +0.5 and +1.5) to visualize the settling of the loop.

The graph 20a shows the switch target 21 (i.e. simulated switch signal 21). In the first half of the simulation, the switch target is "1" and, thus, the optical power should be guided to the second output "OutA". In the second half of the simulation, the switch target is "0" and, thus, the optical power should be guided to the first output "OutB".

As depicted in graph 20a, the optical power at the first output 22 (i.e. the first measurement signal 22) converges to one the first half of the simulation and to zero in the second half of the simulation.

As depicted in graph 23a, the error signal 24a (i.e. the feedback signal) converges to zero in the first half of the simulation and the second half of the simulation.

As depicted in graph 25a, the optical power at the second output 26 (i.e. the second measurement signal 26) converges to zero in the first half of the simulation and to one in the second half of the simulation.

In brief, Fig. 16 shows waveforms in the single actuator single sensor tuning system. In settled state, the input power is directed fully to output A when the switch target is "1" and fully to output B when the switch target is "0". In both cases, the error settles close to zero.

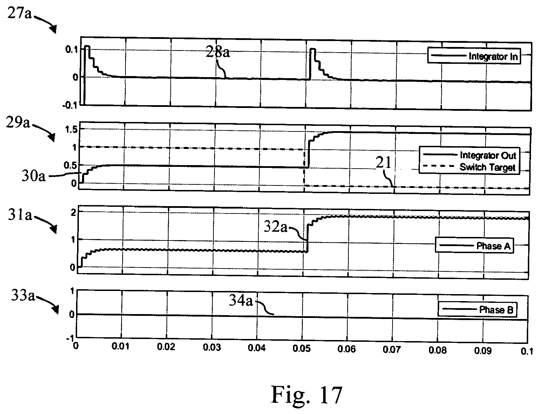

Fig. 17 schematically illustrates simulation results of the execution model 8a of Fig. 5.

The simulation results of Fig. 9 correspond to the simulation results of Fig. 16.

As depicted in graph 27a, the input integrator signal 28a converges to zero in the first half of the simulation and the second half of the simulation.

As depicted in graph 29a, the integrated feedback signal 30a converges to +0.5 in the first half of the simulation and to +1.5 in the second half of the simulation (these values can be stored for initialization of the integrator 9).

As depicted in graph 31a, the control signal 32a settles at roughly π/2 in the first half of the simulation and settles at roughly 3π/2 in the second half of the simulation. The simulation is intended to model a voltage at a heater. At the integrator output (i.e. integrated feedback signal 30a), values are scaled to be phase (in radian) normalized by π. Between the integrator output and the MZI switch, there is a gain of 1.3, converting normalized phase to voltage. Hidden in the MZI switch, "PhaseA" signal is scaled by π/1.3 to obtain true phase values. So, the control signal 32a settles at a voltage of 0.65[V] corresponding to a phase of π/2 or a voltage of 1.95[V] corresponding to a phase of 3π/2.

As depicted in graph 33a, the control signal 34a is always zero.

In brief, Fig. 17 shows controller signals in the single actuator, single sensor tuning system. Note the inversion of the integrator input signal 28a with respect to the error signal 24a (Fig. 16) in the second half of the simulation. The wrapping rule in the integrator now ensures positive integrator output values. Compared to the other systems, initial values on the integrator also need to be different. Ideal values for this system are +0.5 and +1.5. To achieve visible settling of the loop, this simulation uses initial values +0.25 and +1.25. Phase A voltage settles at roughly π/2 phase shift in the first half and 3π/2 phase shift in the second half of the simulation. Phase B is always zero, so branch B could be implemented without phase shifter, saving pad space and wire bonds on the photonics integrated circuit. This system requires wider tuning range of the actuator for phase A than the other systems.

Returning to the general explanations, it should be recognized that the embodiments describe methods with an exemplary ordering of method steps. The specific ordering of method steps is however given for illustrative purposes only and should not be construed as binding.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

Note that the present technology can also be configured as described below.
(1) An electronic controller for an optical switch, wherein the optical switch is configured to guide optical power associated with a first optical signal input at a first input to at least one of a first output and a second output, via a first branch and a second branch, depending on a difference in optical distance between the first branch and the second branch, wherein the electronic controller includes circuitry configured to:
   obtain a measurement signal of the optical power at the first output or the second output;
   obtain, using a switch signal, a feedback signal, wherein obtaining the feedback signal includes modulating the measurement signal with a first periodic signal and averaging the resulting signal; and
   apply a control signal, formed based on adding the integrated feedback signal and the first periodic signal, to an actuator for changing the optical phase length of the first branch or the second branch for guiding the optical power associated with the first optical signal to the first output or the second output as indicated by the switch signal.
(2) The electronic controller of (1), wherein the circuitry is configured to:
   obtain a first measurement signal of the optical power at the first output and a second measurement signal of the optical power at the second output;
   obtain, using the switch signal, the feedback signal, wherein obtaining the feedback signal includes modulating, depending on the switch signal, the first measurement signal or the second measurement signal with the first periodic signal and averaging the resulting signal; and
   apply the control signal, formed based on adding the integrated feedback signal and the first periodic signal, either to a first actuator for changing the optical phase length of the first branch or to a second actuator for changing the optical phase length of the second branch.
(3) The electronic controller of (1) or (2), wherein the circuitry is configured to store information associated with the control signal once the closed loop is settled.
(4) The electronic controller of (3), wherein the information includes a wavelength of the input optical signal.
(5) The electronic controller of any one of (1) to (4), wherein the circuitry includes an integrator for loop settling, and wherein the integrator is initialized with a different value depending on the switch signal.
(6) The electronic controller of (5), wherein the circuitry is configured to store an amplitude of the integrated feedback signal as a value for initializing the integrator once the closed loop is settled.
(7) The electronic controller of any one of (1) to (6), wherein the optical switch is configured to guide optical power associated with a second optical signal input at a second input to a different output than the first optical signal input at the first input,
   wherein the circuitry is configured to control a modulation of the first optical signal according to a second periodic signal before input at the first input.
(8) The electronic controller of (7), wherein the circuitry is configured to obtain, using the switch signal, the feedback signal, wherein obtaining the feedback signal includes modulating, depending on the switch signal, the first measurement signal or the second measurement signal with the first periodic signal and the second periodic signal and averaging the resulting signal.
(9) A control system for an optical switch, wherein the control system includes:
   the optical switch, wherein the optical switch includes a first branch, a second branch, an actuator for changing the optical phase length of the first branch or the second branch, a first output, a second output and a first input, wherein the optical switch is configured to guide optical power associated with a first optical signal input at the first input to at least one of the first output and the second output, via the first branch and the second branch, depending on a difference in optical phase length between the first branch and the second branch;
   an electronic controller, wherein the electronic controller includes circuitry configured to:
      obtain a measurement signal of the optical power at the first output or the second output;
      obtain, using a switch signal, a feedback signal, wherein obtaining the feedback signal includes modulating the measurement signal with a first periodic signal and averaging the resulting signal; and
      apply a control signal, formed based on adding the integrated feedback signal and the first periodic signal, to the actuator for guiding the optical power associated with the first optical signal to the first output or the second output as indicated by the switch signal.
(10) The control system of (9), wherein the optical switch includes a first actuator for changing the optical phase length of the first branch and a second actuator for changing the optical phase length of the second branch;
   wherein the circuitry is configured to:
   obtain a first measurement signal of the optical power at the first output and a second measurement signal of the optical power at the second output;
   obtain, using the switch signal, the feedback signal, wherein obtaining the feedback signal includes modulating, depending on the switch signal, the first measurement signal or the second measurement signal with the first periodic signal and averaging the resulting signal; and
   apply the control signal, formed based on adding the integrated feedback signal and the first periodic signal, either to a first actuator for changing the optical phase length of the first branch or to a second actuator for changing the optical phase length of the second branch.
(11) The control system of (9) or (10), wherein the circuitry is configured to store information associated with the control signal once the closed loop is settled, in particular, wherein the information includes a wavelength of the input optical signal.
(12) The control system of any one of (9) to (11), wherein the circuitry includes an integrator for loop settling, and wherein the integrator is initialized with a different value depending on the switch signal.
(13) The control system of (12), wherein the circuitry is configured to store an amplitude of the integrated feedback signal as a value for initializing the integrator once the closed loop is settled.
(14) The control system of any one of (9) to (13), wherein the circuitry is configured to receive the switch signal indicating whether the optical power is to be guided to the first output or the second output.
(15) The control system of any one of (9) to (14), wherein the optical switch further includes a second input, wherein the optical switch is configured to guide optical power associated with a second optical signal input at the second input to a different output than the first optical signal input at the first input; and
   wherein the circuitry is configured to control a modulation of the first optical signal according to a second periodic signal before input at the first input.
(16) The control system of (15), wherein the circuitry is configured to obtain, using the switch signal, the feedback signal, wherein obtaining the feedback signal includes modulating, depending on the switch signal, the first measurement signal or the second measurement signal with the first periodic signal and the second periodic signal and averaging the resulting signal to obtain the feedback signal.
(17) The control system of (15) or (16), wherein the first branch is longer than the second branch corresponding to a difference in optical phase length of π/2.
(18) The control system of any one of (9) to (17), wherein the optical switch is a Mach-Zehnder interferometer, MZI, optical switch.
(19) An electronic control method for an optical switch, wherein the optical switch is configured to guide optical power associated with a first optical signal input at a first input to at least one of a first output and a second output, via a first branch and a second branch, depending on a difference in optical distance between the first branch and the second branch, wherein the electronic control method includes:
   obtaining a measurement signal of the optical power at the first output or the second output;
   obtaining, using a switch signal, a feedback signal, wherein obtaining the feedback signal includes modulating the measurement signal with a first periodic signal and averaging the resulting signal; and
   applying a control signal, formed based on adding the integrated feedback signal and the first periodic signal, to an actuator for changing the optical distance of the first branch or the second branch for guiding the optical power associated with the first optical signal to the first output or the second output as indicated by the switch signal.
(20) The electronic control method of (19), including:
   obtaining a first measurement signal of the optical power at the first output and a second measurement signal of the optical power at the second output;
   obtaining, using the switch signal, the feedback signal, wherein obtaining the feedback signal includes modulating, depending on the switch signal, the first measurement signal or the second measurement signal with the first periodic signal and averaging the resulting signal; and
   applying the control signal, formed based on adding the integrated feedback signal and the first periodic signal, either to a first actuator for changing the optical phase length of the first branch or to a second actuator for changing the optical phase length of the second branch.
(21) The electronic control method of (19) or (20), including storing information associated with the control signal once the closed loop is settled.
(22) The electronic control method of (21), wherein the information includes a wavelength of the input optical signal.
(23) The electronic control method of any one of (19) to (22), wherein loop settling is performed by an integrator, and wherein the integrator is initialized with a different value depending on the switch signal.
(24) The electronic control method of (23), including storing an amplitude of the integrated feedback signal as a value for initializing the integrator once the closed loop is settled.
(25) The electronic control method of any one of (19) to (24), wherein the optical switch is configured to guide optical power associated with a second optical signal input at a second input to a different output than the first optical signal input at the first input,
   wherein the electronic control method includes controlling a modulation of the first optical signal according to a second periodic signal before input at the first input.
(26) The electronic control method of (25), including obtaining, using the switch signal, the feedback signal, wherein obtaining the feedback signal includes modulating, depending on the switch signal, the first measurement signal or the second measurement signal with the first periodic signal and the second periodic signal and averaging the resulting signal.
(27) A computer program comprising program code causing a computer to perform the electronic control method according to any one of (19) to (26), when being carried out on a computer.
(28) A non-transitory computer-readable recording medium that stores therein a computer program product, which, when executed by a processor, causes the electronic control method according to any one of (19) to (26) to be performed.

## Claims

1. An electronic controller for an optical switch, wherein the optical switch is configured to guide optical power associated with a first optical signal input at a first input to at least one of a first output and a second output, via a first branch and a second branch, depending on a difference in optical phase length between the first branch and the second branch, wherein the electronic controller comprises circuitry configured to:
obtain a measurement signal of the optical power at the first output or the second output;
obtain, using a switch signal, a feedback signal, wherein obtaining the feedback signal includes modulating the measurement signal with a first periodic signal and averaging the resulting signal; and
apply a control signal, formed based on adding the integrated feedback signal and the first periodic signal, to an actuator for changing the optical phase length of the first branch or the second branch for guiding the optical power associated with the first optical signal to the first output or the second output as indicated by the switch signal.

2. The electronic controller of claim 1, wherein the circuitry is configured to:
obtain a first measurement signal of the optical power at the first output and a second measurement signal of the optical power at the second output;
obtain, using the switch signal, the feedback signal, wherein obtaining the feedback signal includes modulating, depending on the switch signal, the first measurement signal or the second measurement signal with the first periodic signal and averaging the resulting signal; and
apply the control signal, formed based on adding the integrated feedback signal and the first periodic signal, either to a first actuator for changing the optical phase length of the first branch or to a second actuator for changing the optical phase length of the second branch.

3. The electronic controller of claim 1, wherein the circuitry is configured to store information associated with the control signal once the closed loop is settled.

4. The electronic controller of claim 3, wherein the information includes a wavelength of the input optical signal.

5. The electronic controller of claim 1, wherein the circuitry includes an integrator for loop settling, and wherein the integrator is initialized with a different value depending on the switch signal.

6. The electronic controller of claim 5, wherein the circuitry is configured to store an amplitude of the integrated feedback signal as a value for initializing the integrator once the closed loop is settled.

7. The electronic controller of claim 1 or 2, wherein the optical switch is configured to guide optical power associated with a second optical signal input at a second input to a different output than the first optical signal input at the first input,
wherein the circuitry is configured to control a modulation of the first optical signal according to a second periodic signal before input at the first input.

8. The electronic controller of claim 7, wherein the circuitry is configured to obtain, using the switch signal, the feedback signal, wherein obtaining the feedback signal includes modulating, depending on the switch signal, the first measurement signal or the second measurement signal with the first periodic signal and the second periodic signal and averaging the resulting signal.

9. A control system for an optical switch, wherein the control system comprises:
the optical switch, wherein the optical switch includes a first branch, a second branch, an actuator for changing the optical phase length of the first branch or the second branch, a first output, a second output and a first input, wherein the optical switch is configured to guide optical power associated with a first optical signal input at the first input to at least one of the first output and the second output, via the first branch and the second branch, depending on a difference in optical phase length between the first branch and the second branch;
an electronic controller, wherein the electronic controller includes circuitry configured to:
obtain a measurement signal of the optical power at the first output or the second output;
obtain, using a switch signal, a feedback signal, wherein obtaining the feedback signal includes modulating the measurement signal with a first periodic signal and averaging the resulting signal; and
apply a control signal, formed based on adding the integrated feedback signal and the first periodic signal, to the actuator for guiding the optical power associated with the first optical signal to the first output or the second output as indicated by the switch signal.

10. The control system of claim 9, wherein the optical switch includes a first actuator for changing the optical phase length of the first branch and a second actuator for changing the optical phase length of the second branch;
wherein the circuitry is configured to:
obtain a first measurement signal of the optical power at the first output and a second measurement signal of the optical power at the second output;
obtain, using the switch signal, the feedback signal, wherein obtaining the feedback signal includes modulating, depending on the switch signal, the first measurement signal or the second measurement signal with the first periodic signal and averaging the resulting signal; and
apply the control signal, formed based on adding the integrated feedback signal and the first periodic signal, either to a first actuator for changing the optical phase length of the first branch or to a second actuator for changing the optical phase length of the second branch.

11. The control system of claim 9, wherein the circuitry includes an integrator for loop settling, and wherein the integrator is initialized with a different value depending on the switch signal.

12. The control system of claim 9, wherein the optical switch further includes a second input, wherein the optical switch is configured to guide optical power associated with a second optical signal input at the second input to a different output than the first optical signal input at the first input; and
wherein the circuitry is configured to control a modulation of the first optical signal according to a second periodic signal before input at the first input.

13. The control system of claim 12, wherein the circuitry is configured to obtain, using the switch signal, the feedback signal, wherein obtaining the feedback signal includes modulating, depending on the switch signal, the first measurement signal or the second measurement signal with the first periodic signal and the second periodic signal and averaging the resulting signal to obtain the feedback signal.

14. The control system of claim 12, wherein the first branch is longer than the second branch corresponding to a difference in optical phase length of π/2.

15. The control system of claim 9, wherein the optical switch is a Mach-Zehnder interferometer, MZI, optical switch.
